# EUROPÄISCHE PATENTSCHRIFT

(11) **EP 1 781 969 B1**
(45) Veröffentlichungstag und Bekanntmachung des Hinweises auf die Patenterteilung: **01.10.2008**
(21) Anmeldenummer: 05771467.7
(22) Anmeldetag: 11.08.2005
(51) Int. Cl.: F16H 63/06, F16H 55/56, F16H 9/12

(54) **KEGELSCHEIBENUMSCHLINGUNGSGETRIEBE, VERFAHREN ZU DESSEN HERSTELLUNG SOWIE FAHRZEUG MIT EINEM DERARTIGEN GETRIEBE**
CONICAL PULLEY FLEXIBLE DRIVE TRANSMISSION, METHOD FOR PRODUCING THE SAME AND VEHICLE COMPRISING SAID TRANSMISSION
TRANSMISSION A VARIATION CONTINUE A DISQUES CONIQUES, PROCEDE DE FABRICATION DE LADITE TRANSMISSION ET VEHICULE EQUIPE DE CETTE TRANSMISSION

(30) Priorität: 19.08.2004 DE 102004040204
(43) Veröffentlichungstag der Anmeldung: 09.05.2007
(73) Patentinhaber: LuK Lamellen und Kupplungsbau Beteiligungs KG, 77815 Bühl (DE)
(72) Erfinder: FAUST, Hartmut, 77815 Bühl (DE)
(86) Internationale Anmeldenummer: PCT/DE2005/001413
(87) Internationale Veröffentlichungsnummer: WO 2006/018010

(56) Entgegenhaltungen:
- DE-A1- 10 037 136
- DE-A1- 19 921 750

## Beschreibung

Die Erfindung betrifft ein Automatgetriebe in Form eines Kegelscheibenumschlingungsgetriebes, wie es beispielsweise aus der DE 10 2004 015 215 und weiteren Veröffentlichungen bekannt ist, sowie ein Verfahren zu dessen Herstellung und ein damit ausgerüstetes Fahrzeug.

So ein Kegelscheibenumschlingungsgetriebe ist aus der gattungsgemäßen DE 19 921 750 A bekannt.

Automatgetriebe im weiteren Sinne sind Kennungswandler, deren momentane Übersetzung sich selbständig in Abhängigkeit von momentanen oder zu erwartenden Betriebszuständen, wie zum Beispiel Teillast, Schub und Umgebungsparameter, wie zum Beispiel Temperatur, Luftdruck, Luftfeuchtigkeit, stufenweise oder stufenlos verändert. Zu ihnen gehören solche Kennungswandler, die auf einem elektrischen, pneumatischen, hydrodynamischen, hydrostatischen Prinzip oder auf einem aus diesen Prinzipien gemischten Prinzip beruhen.

Die Automatisierung bezieht sich auf die verschiedensten Funktionen, wie zum Beispiel das Anfahren, die Übersetzungswahl, die Art der Übersetzungsveränderung bei verschiedene Betriebssituationen, wobei unter Art der Übersetzungsveränderung zum Beispiel das Schalten von einzelnen Stufen nacheinander, das Überspringen von Schaltstufen und die Geschwindigkeit der Verstellung verstanden werden kann.

Der Wunsch nach Komfort, Sicherheit und vertretbarem Bauaufwand bestimmt den Automatisierungsgrad d. h. wie viele Funktionen selbständig ablaufen.

In der Regel kann der Fahrer manuell in den automatischen Ablauf eingreifen oder ihn für einzelne Funktionen begrenzen.

Automatgetriebe im engeren Sinne, wie sie heute vor allem im Fahrzeugbau verwendet werden, haben in der Regel folgenden Aufbau:

Auf der Antriebsseite des Getriebes befindet sich eine Anfahreinheit in Form einer regelbaren Kupplung, zum Beispiel einer nassen oder trockenen Reibungskupplung, einer hydrodynamischen Kupplung oder einem hydrodynamischen Wandler.

Zu einem hydrodynamischen Wandler wird häufig eine Überbrückungskupplung parallel zum Pumpen- und Turbinenteil geschaltet, welche durch direkte Kraftübertragung den Wirkungsgrad steigert und durch definierten Schlupf bei kritischen Drehzahlen die Schwingung dämpft.

Die Anfahreinheit treibt ein mechanisches, stufenloses oder gestuftes Wechselgetriebe an, das eine Vorwärts-/Rückwärtsfahreinheit, eine Haupt-, Bereichs-, Splitgruppe und/oder einen Variator enthalten kann. Zahnradgetriebegruppen werden, je nach Anforderungen an Laufruhe, Platzverhältnisse und Übertragungsmöglichkeiten, in Vorgelege- oder Planetenbauweise mit Gerad- oder Schrägverzahnung ausgelegt.

Das Ausgangselement des mechanischen Getriebes, eine Welle oder ein Zahnrad, treibt direkt oder indirekt über Zwischenwellen bzw. eine Zwischenstufe mit einer konstanten Übersetzung auf ein Differentialgetriebe, das als separates Getriebe gestaltet sein kann oder ein integrierter Bestandteil des Automatgetriebes ist. Grundsätzlich eignet sich das Getriebe für Längs- und Quereinbau im Fahrzeug.

Zur Verstellung der Übersetzung im mechanischen Getriebe sind hydrostatische, pneumatische und/oder elektrische Stellglieder vorgesehen. Eine Hydraulikpumpe, die nach dem Verdrängungsprinzip arbeitet, liefert Drucköl für die Anfahreinheit, insbesondere die hydrodynamische Einheit, für die hydrostatischen Stellelemente des mechanischen Getriebes und für die Schmierung und Kühlung des Systems. Je nach erforderlichem Druck und Fördervolumen kommen Zahnradpumpen, Schraubenpumpen, Flügelzellenpumpen und Kolbenpumpen, letztere meistens in radialer Bauart, in Frage. In der Praxis haben sich Zahnradpumpen und Radialkolbenpumpen für diesen Zweck durchgesetzt, wobei die Zahnradpumpen wegen ihres geringen Bauaufwandes und die Radialkolbenpumpe wegen des höheren Druckniveaus und der besseren Regelbarkeit Vorteile bieten.

Die Hydraulikpumpe kann an einer beliebigen Stelle des Getriebes an einer ständig von der Antriebseinheit angetriebenen Haupt- oder Nebenwelle angeordnet sein.

Es sind stufenlose Automatgetriebe bekannt, bestehend aus einer Anfahreinheit, einem Planetenwendegetriebe als Vorwärts-/Rückwärtsfahreinheit, einer Hydraulikpumpe, einem Variator, einer Zwischenwelle und einem Differential. Der Variator wiederum besteht aus zwei Kegelscheibenpaaren und einem Umschlingungsorgan. Jedes Kegelscheibenpaar besteht aus einer in axialer Richtung verschiebbaren zweiten Kegelscheibe. Zwischen diesen Kegelscheibenpaaren läuft das Umschlingungsorgan, zum Beispiel ein Schubgliederband, eine Zugkette oder ein Riemen. Über die Verstellung der zweiten Kegelscheibe ändert sich der Laufradius des Umschlingungsorgans und somit die Übersetzung des stufenlosen Automatgetriebes.

Stufenlose Automatgetriebe erfordern ein hohes Druckniveau, um die Kegelscheiben des Variators in allen Betriebspunkten mit der gewünschten Geschwindigkeit verstellen zu können und außerdem mit einem genügenden Basisanpressdruck weitgehend verschleißfrei das Drehmoment zu übertragen.

Eine der Erfindung zugrunde liegende Teilaufgabe liegt darin, die mittels eines hydraulischen Mediums dargestellte Kraftübertragung zu verbessern. Eine weitere Teilaufgabe liegt darin, die Teilefertigung zu vereinfachen und auch damit die Herstellungskosten günstig zu beeinflussen. Eine weitere Teilaufgabe der Erfindung liegt darin, die Betriebsfestigkeit von Bauteilen zu erhöhen und somit die Lebensdauer eines derartigen Automatgetriebes zu verlängern. Eine weitere Teilaufgabe der Erfindung liegt darin begründet, die Drehmomentübertragungsfähigkeit eines derartigen Getriebes zu erhöhen bzw. größere Kräfte durch die Bauteile des Getriebes übertragen zu können.

Diese Aufgabenteile werden durch die in den Ansprüchen dargelegte sowie in der Beschreibung auch im Zusammenhang mit den Figuren erläuterte Erfindung mit deren Weiterbildungen gelöst.

Dadurch wird beispielsweise eine Verkürzung der Zuführbohrung für das hydraulische Medium erreicht, die so wirtschaftlicher und mit erhöhter Prozesssicherheit gefertigt werden kann.

Durch diese Anordnung der Bohrung mitten in der Steckverzahnung bildet diese praktisch eine Art Rippen um die hoch beanspruchten Bohrungen, wodurch eine erhebliche Festigkeitssteigerung erzielbar ist, da die Spannungen im kritischen Bereich um den Bohrungsaustritt aus der Mantelfläche der Welle zwischen den Zähnen erheblich verringert werden.

Es kann sich als zweckmäßig erweisen, wenn der Zahn im Bereich des Bohrungsaustritts entfällt, wobei es weiterhin vorteilhaft sein kann, zwei dem Bohrungsaustritt benachbarte Zähne am Innendurchmesser der Wegscheibe entfallen zu lassen.

Allgemein kann es bei einem Kegelscheibenumschlingungsgetriebe nach der Erfindung von Vorteil sein, mehrere Bohrungsaustritte am Umfang vorzusehen, wobei die Bohrungsaustritte bevorzugt gleichmäßig über den Umfang verteilt angeordnet werden können.

Bei einem erfindungsgemäßen Kegelscheibenumschlingungsgetriebe werden bevorzugt die Wegscheibe und die Festscheibe eines Kegelscheibenpaares in Umfangsrichtung einander zugeordnet angeordnet.

Hierzu kann es vorteilhaft sein, wenn im Bereich der Innenverzahnung der Wegscheibe eine Erhöhung vorgesehen ist, die an der Stelle des entfallenen Zahnes der Welle eingreift, und/oder im Bereich des Außendurchmessers der Welle zumindest eine Erhöhung vorgesehen ist, die im Bereich der entfallenen Zähne der Wegscheibe zu liegen kommt, wodurch konstruktiv eine Fehlmontage ausgeschlossen werden kann.

Weiterhin bezieht sich die Erfindung auf ein Verfahren zum Herstellen eines erfindungsgemäßen Kegelscheibenumschlingungsgetriebes, wobei das Werkzeug zur Herstellung der Außenverzahnung der Welle und/oder der Innenverzahnung der Wegscheibe - in Umfangsrichtung betrachtet - nur einen Teil des Profils erzeugt und zur Fertigung eines weiteren Teils winkelmäßig verdreht wird.

Des Weiteren bezieht sich die Erfindung auf ein Fahrzeug mit einem erfindungsgemäßen Getriebe.

Die Erfindung wird im Folgenden anhand schematischer Zeichnungen beispielsweise mit weiteren Einzelheiten erläutert.

Es stellen dar:
Figur 1 eine Teilansicht eines Kegelscheibenumschlingungsgetriebes,
Figur 2 eine im Wesentlichen der Figur 1 entsprechende Darstellung einer Ausführungsform der Erfindung,
Figur 3 einen teilweisen Schnitt gemäß der Linie III-III der Figur 2,
Figur 4 die Einzelheit IV der Figur 3,
Figur 5 die Einzelheit V der Figur 3
Figur 6 weitere mögliche Ausführungsformen gemäß Schnitt III-III

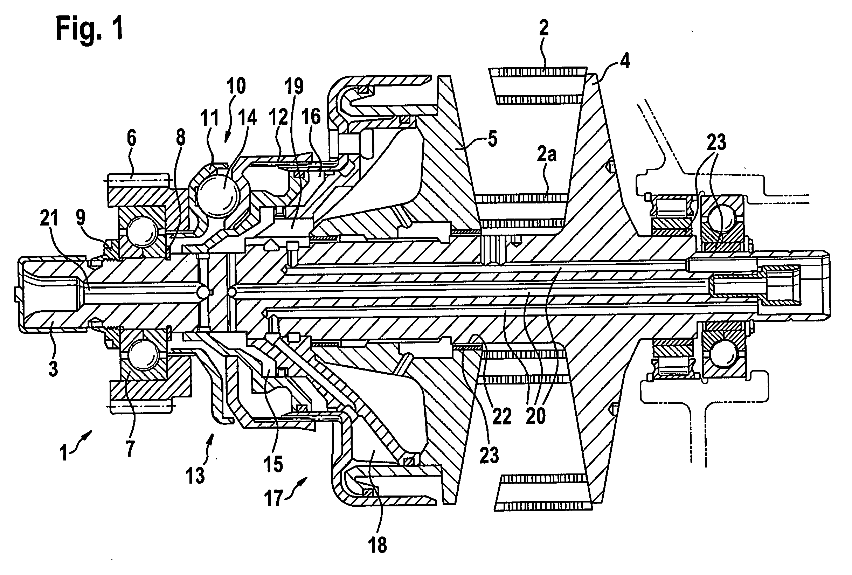

Figur 1 zeigt nur einen Teil eines Kegelscheibenumschlingungsgetriebes, nämlich den von einem Antriebsmotor, wie beispielsweise einem Verbrennungsmotor angetriebenen antriebs- oder eingangsseitigen Teil des Kegelscheibenumschlingungsgetriebes 1. Bei einem vollständig ausgeführten Kegelscheibenumschlingungsgetriebe ist diesem eingangsseitigen Teil ein komplementär ausgebildeter abtriebsseitiger Teil des stufenlos einstellbaren Kegelscheibenumschlingungsgetriebes zugeordnet, wobei beide Teile über ein Umschlingungsmittel in der Form beispielsweise einer Laschenkette 2 zur Momentenübertragung miteinander verbunden sind. Das Kegelscheibenumschlingungsgetriebe 1 weist eingangsseitig eine Welle 3 auf, die bei dem dargestellten Ausführungsbeispiel einstückig mit einer feststehenden Kegelscheibe oder Festscheibe 4 ausgebildet ist. Diese axial feststehende Kegelscheibe 4 befindet sich in Axiallängsrichtung der Welle 3 einer axial verlagerbaren Kegelscheibe oder Wegscheibe 5 benachbart gegenüber.

Bei der Darstellung nach Fig. 1 ist die Laschenkette 2 am antriebsseitigen Kegelscheibenpaar 4, 5 in einer radial äußeren Stellung dargestellt, die sich dadurch ergibt, dass die axial verlagerbare Kegelscheibe 5 in der Zeichnung in Richtung nach rechts verlagert wird und diese Verlagerungsbewegung der axial verlagerbaren Kegelscheibe 5 zu einer Bewegung der Laschenkette 2 in Richtung nach radial außen führt, wodurch sich eine Übersetzungsänderung des Getriebes ins Schnelle ergibt.

Die axial verlagerbare Kegelscheibe 5 kann in an sich bekannter Weise in der Zeichnungsebene auch nach links verlagert werden, wobei sich in dieser Stellung die Laschenkette 2 in einer radial inneren Stellung befindet (die mit dem Bezugszeichen 2a versehen ist), bei der sich eine Übersetzung des Kegelscheibenumschlingungsgetriebes 1 ins Langsame ergibt.

Das von einem nicht näher dargestellten Antriebsmotor bereit gestellte Drehmoment wird in den in Fig. 1 dargestellten antriebsseitigen Teil des Kegelscheibenumschlingungsgetriebes über ein auf der Welle 3 gelagertes Zahnrad 6 eingeleitet, welches auf der Welle 3 über ein Wälzlager in der Form eines axiale und radiale Kräfte aufnehmenden Kugellagers 7 gelagert ist, welches auf der Welle 3 über eine Scheibe 8 und eine Wellenmutter 9 festgelegt wird. Zwischen dem Zahnrad 6 und der axial verlagerbaren Kegelscheibe 5 befindet sich ein Drehmomentfühler 10 angeordnet, dem eine mit einer axial feststehenden Spreizscheibe 11 und einer axial verlagerbaren Spreizscheibe 12 versehene Spreizscheibenkonfiguration 13 zugeordnet ist. Zwischen den beiden Spreizscheiben 11, 12 sind Wälzkörper beispielsweise in der Form der dargestellten Kugeln 14 angeordnet.

Ein über das Zahnrad 6 eingeleitetes Drehmoment führt zur Ausbildung eines Drehwinkels zwischen der axial feststehenden Spreizscheibe 11 und der axial verlagerbaren Spreizscheibe 12, was zu einer axialen Verlagerung der Spreizscheibe 12 führt und zwar aufgrund von an dieser angeordneten Anlauframpen, auf die die Kugeln 14 auflaufen und so für einen axialen Versatz der Spreizscheiben zueinander sorgen.

Der Drehmomentfühler 10 besitzt zwei Druckräume 15, 16, von denen der erste Druckraum 15 für eine Beaufschlagung mit Druckmittel in Abhängigkeit von dem eingeleiteten Drehmoment vorgesehen ist und der zweite Druckraum 16 mit Druckmittel versorgt wird und zwar in Abhängigkeit von der Übersetzung des Getriebes.

Zur Erzeugung der Anpresskraft, mit der die Laschenkette 2 zwischen der axial feststehenden Kegelscheibe 4 und der axial verlagerbaren Kegelscheibe 5 mit einer Normalkraft beaufschlagt wird, ist eine Kolben/Zylindereinheit 17 vorgesehen, die zwei Druckräume 18, 19 besitzt. Der erste Druckraum 18 dient der übersetzungsabhängigen Veränderung der Beaufschlagung der Laschenkette 2 und der zweite Druckraum 19 dient in Verbindung mit dem drehmomentabhängig gesteuerten Druckraum 15 des Drehmomentfühlers 10 zur Erhöhung oder Verringerung der Anpresskraft, mit der die Laschenkette 2 zwischen den Kegelscheiben 4, 5 beaufschlagt wird.

Die Welle 3 besitzt zur Druckmittelversorgung der Druckräume drei Kanäle 20, über die von einer nicht dargestellten Pumpe Druckmittel in die Druckräume eingespeist wird. Über einen auslassseitigen Kanal 21 kann das Druckmittel aus der Welle 3 abfließen und dem Kreislauf wieder zugeführt werden.

Die Beaufschlagung der Druckräume 15, 16, 18, 19 führt zu einer momenten- und übersetzungsabhängigen Verschiebung der axial verlagerbaren Kegelscheibe 5 auf der Welle 3. Die Welle 3 besitzt zur Aufnahme der verlagerbaren Kegelscheibe 5 Zentrierflächen 22, die als Schiebesitz für die verlagerbare Kegelscheibe 5 dienen.

Wie es anhand der Fig. 1 leicht ersichtlich ist, besitzt das Kegelscheibenumschlingungsgetriebe 1 im Bereich der Lagerstellen der Kegelscheibe 5 auf der Welle 3 jeweils eine Geräuschdämpfungseinrichtung 23. Dazu kann die Geräuschdämpfungseinrichtung einen Ringkörper und eine dämpfende Einlage aufweisen oder nur aus einer dämpfenden Einlage bestehen.

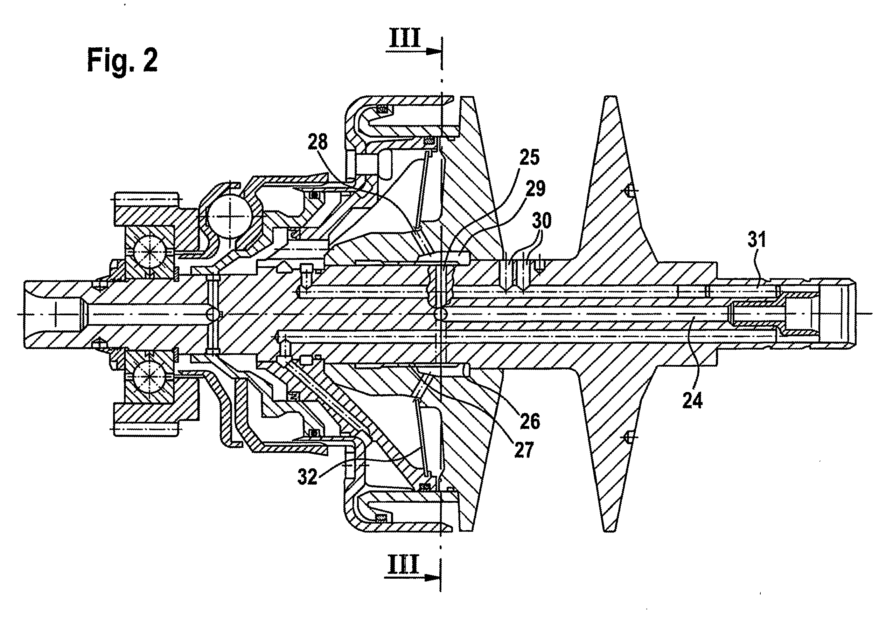

Die in Figur 1 verwendeten Bezugszeichen beziehen sich auch auf die im Wesentlichen vergleichbaren Merkmale der Figur 2. Die Figuren sind also in sofern als Einheit zu betrachten. Der Übersichtlichkeit halber sind in Figur 2 nur diejenigen Bezugszeichen verwendet, die über diejenigen der Figur 1 hinausgehen.

In Figur 2 ist nun der mittlere der drei Kanäle 20 entsprechend der Erfindung ausgestaltet. Es ist ersichtlich, dass diese den zentralen Kanal 20 bildende Bohrung 24, die als Sacklochbohrung von der Figur 1 und 2 rechts dargestellten Seite gefertigt wird, deutlich kürzer ausgeführt ist als in Figur 1. Derartige Sacklochbohrungen sind aufwendig in der Herstellung und erfordern einen sehr hohen Genauigkeitsgrad in der Fertigung. Der Herstellungsaufwand sowie die Anforderungen hinsichtlich der Prozesssicherheit steigen dabei überproportional mit der Länge. Die Verkürzung einer derartigen Bohrung wirkt sich also günstig z. B. auf die Herstellkosten aus.

Im Bereich des Grundes dieser Bohrung 24 zweigt die Querbohrung 25 ab, von denen mehrere am Umfang verteilt angeordnet sein können. Im dargestellten Fall ist diese Querbohrung 25 als radiale Bohrung dargestellt; sie kann jedoch auch in einem anderen Winkel als Schrägbohrung gefertigt werden. Die Bohrung 25 durchdringt die Mantelfläche der Welle 3 an einer Stelle, die unabhängig vom Betriebszustand, also z. B. von der eingestellten Übersetzung, in einem Bereich liegt, der stets von der Wegscheibe 5 überdeckt wird.

Durch das Verlegen der Querbohrung 25 in den Überdeckungsbereich der Wegscheibe 5 kann die Welle 3 axial kürzer ausgeführt werden, wodurch Bauraum eingespart werden kann. Außerdem kann sich durch die Verkürzung der Welle 3 auch eine Belastungsreduzierung ergeben.

Die Mündung des Kanals bzw. der Querbohrung 25 kann dabei beispielsweise im Bereich der Ausdrehung 26, der der Zentrierfläche 22 der Welle benachbart ist, angeordnet werden. Dies kann insbesondere vorteilhaft sein, wenn die Verzahnung 27, die die Wegscheibe 5 axial verschiebbar jedoch drehfest mit der Welle 3 verbindet, beispielsweise durch die Drehmomentübertragung hoch beansprucht ist.

In vielen Fällen wird jedoch die Belastung der Verzahnung 27 nicht das kritischste Auslegungskriterium sein, so dass die Mündung der Bohrung 25 in den Bereich dieser Verzahnung gelegt werden kann, wie dies in Figur 2 dargestellt ist. Durch die Anordnung der Querbohrung 25 in der Verzahnung 27 anstatt in der Ausdrehung 26, ergibt sich ein Vorteil dadurch, dass ein größeres Widerstandsmoment vorliegt, wodurch die Biegespannung in der Randfaser verringert wird. Außerdem ist das Flächenträgheitsmoment an dieser Stelle größer, während die kritische Faser die durch die Querbohrung 25 gestört ist, auf etwa gleich bleibendem Radius bleibt. Hierdurch ergibt sich eine deutliche Verringerung der Spannungen im kritischen Bereich um die Mündung der Querbohrung 25 zwischen den Zähnen der Verzahnung 27. Die Versorgung mit Hydraulikfluid ist bei den Figuren 1 und 2 identisch, da die Druckräume 15 und 19 miteinander in Verbindung stehen und die Wegscheibe 5 Verbindungsbohrungen 28 aufweist, die den Bereich der Verzahnung 27 mit dem Druckraum 19 verbinden. In den Figuren ist die Wegscheibe 5 in ihrer äußersten linken Stellung die der Anfahrübersetzung bzw. dem Underdrive entspricht, dargestellt. Wird die Wegscheibe 5 nun nach rechts in Richtung der Festscheibe 4 verschoben, so befindet sich stets ein Teil des Hohlraums bzw. der Kammer 29 über der Mündung der Querbohrung bzw. des Kanal 25, so dass die erforderliche Fluidversorgung ebenso wie in Figur 1 stets gewährleistet ist. Wie auch in Figur 1 gibt es für den Druckraum 16 zwei Schaltzustände, die von der axialen Position der Wegscheibe 5 abhängen. In der dargestellten Stellung sind die Steuerbohrungen 30 freigelegt, so dass der damit in Verbindung stehende, mit einem Stopfen 31 axial verschlossene Kanal 20 und der mit ihm über einen nicht dargestellten Kanal in Verbindung stehende Druckraum 16 drucklos sind bzw. lediglich Umgebungsdruck aufweisen. Wird nun die Wegscheibe 5 auf die Festscheibe 4 zu bewegt, so überfährt sie die Steuerbohrungen 30, wobei ab einem bestimmten Weg die Kammer 29 über den Mündungen der Steuerbohrungen 30 zu liegen kommt. In der Kammer 29 herrscht jedoch ein vom Moment abhängiger hoher Druck, der dann über die Steuerbohrungen 30 und den Kanal 20 auch in die Druckkammer 16 gebracht wird, so dass dort auch hoher Druck anliegt. Auf diese Weise werden zwei Schaltzustände realisiert, die die Anpresskraft übersetzungsabhängig steuern.

Weiterhin ist in Figur 2 eine Tellerfeder 32 vorgesehen, die im drucklosen Zustand des Getriebes 1 die Wegscheibe 5 in eine vorbestimmte axiale Position bringt, wodurch eine Übersetzung des Getriebes 1 eingestellt werden kann, die eine übermäßige Belastung, beispielsweise beim Abschleppen des Fahrzeugs, verhindert.

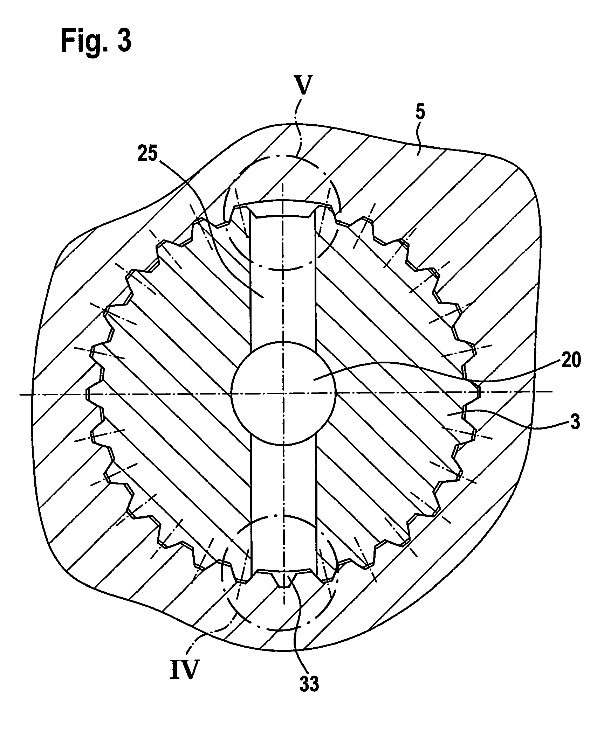

Figur 3 zeigt einen Schnitt entlang der Linie III-III der Figur 2, wobei in der oberen und unteren Hälfte der Figur jeweils eine unterschiedliche Ausführungsform der Querbohrung bzw. des Kanals 25 dargestellt ist.

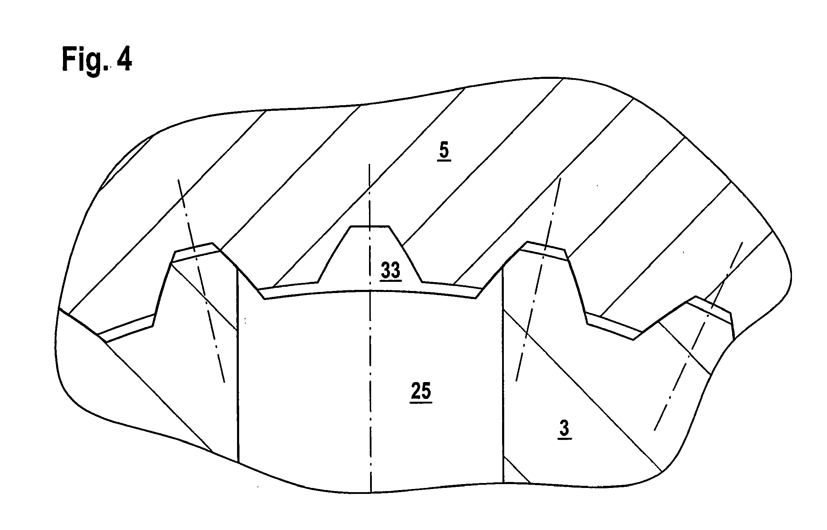

Im unteren Bereich, dessen Ausschnitt IV in Figur 4 nochmals vergrößert dargestellt ist, ist im Bereich der Mündung des Kanals 25 in die Mantelfläche der Welle 3 der dort liegende Zahn entfernt bzw. nicht ausgeführt, so dass - in Axialrichtung der Welle betrachtet - ein Kanal 33 entsteht, der vom Hydraulikfluid durchströmt werden kann.

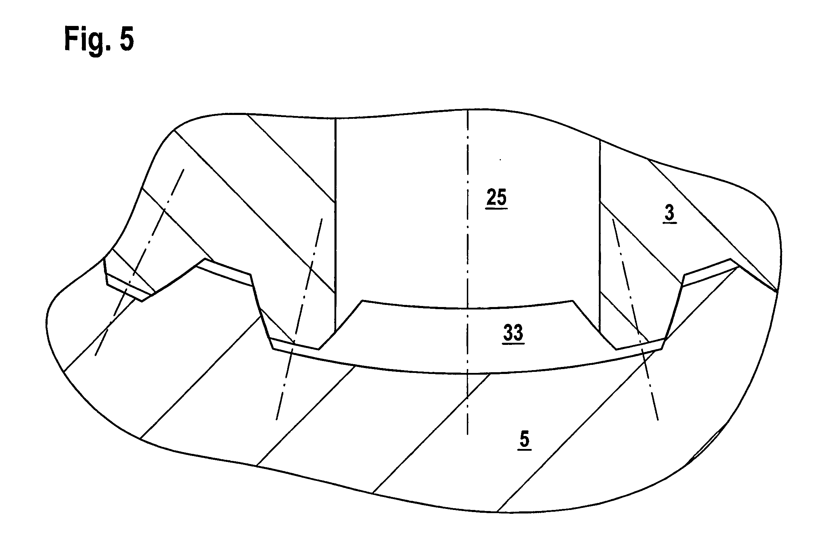

Wenn ein derartiger Querschnitt des Kanals 33 nicht ausreichend ist, können zusätzlich die zwei benachbarten radial nach innen ragenden Zähne der Wegscheibe 5 entfallen, wie dies im Bereich V und vergrößert in Figur 5 dargestellt ist.

Der Entfall der jeweils pro Kanal 33 entfallenden bis zu drei Zähne kann mehrfach am Umfang erfolgen, um den erforderlichen Gesamtströmungsquerschnitt darstellen zu können. Vorteilhafterweise erfolgt dies z. B. dreimal am Umfang mit gleichmäßiger Winkelteilung und einer durch drei teilbaren Zähnezahl z. B. bei 30 Zähnen.

Bei der Montage der Wegscheibe 5 auf der Welle 3 ist zu beachten, dass die Wegscheibe 5 in der richtigen Winkelposition zur Festscheibe 4 zugeordnet wird, um so den erforderlichen Querschnitt des Kanals 33 sicher zu stellen.

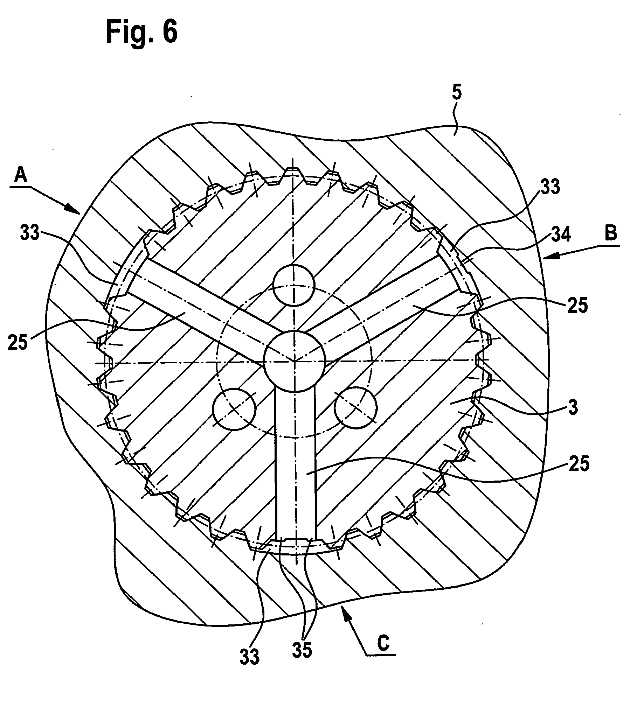

In Figur 6 sind wiederum drei unterschiedliche Kanalanordnungen dargestellt, wobei bei A auf die richtige Montage geachtet werden muss, während bei B und C durch konstruktive Maßnahmen eine Fehlmontage verhindert werden kann.

Bei A ist nochmals die Anordnung gemäß Figur 5 dargestellt, wobei diese Ausführungsform, wie bereits beschrieben, zur Erzielung des erforderlichen Durchflussquerschnitts mehrfach am Umfang verteilt sein kann, ebenso wie die Anordnungen gemäß B und C.

Bei B ist eine konstruktive Lösung dargestellt, die eine falsche Zuordnung bei der Montage ausschließt. Hierzu wird erfindungsgemäß in der Innenverzahnung der Wegscheibe 5 eine Erhöhung 34 genau an der Stelle zwischen zwei ursprünglich vorhandenen Zähnen vorgesehen, an der bei Falschverbau ein Zahn der Welle 3 zu liegen käme.

Bei C ist eine Lösung dargestellt, die auf der Welle 3 eine oder zwei Erhöhungen 35 in der Doppellücke an den Stellen vorgesehen werden, an denen bei versuchtem Falschverbau Zähne der Wegscheibe 5 zu liegen kämen.

Erfindungsgemäß kann die genannte Ausprägung besonders wirtschaftlich dadurch hergestellt werden, dass das Werkzeug zum Abwälzstoßen der Innenverzahnung der Wegscheibe 5 nur 10 Zähne zuzüglich der Werkzeuggestaltung für die beiden entfallenden Zähne und einen entsprechend kleinen Durchmesser aufweist, so dass das Werkzeug bei der Fertigung analog einem Planetenrad dreimal in der Bohrung der Wegscheibe 5 rotiert und dabei die insgesamt ursprünglich 30 Zähne abzüglich der dreimal am Umfang ausgebildeten besonderen Gestaltung einbringt (die Anzahl der Zähne dient lediglich als Beispiel).

Analog wird für die Fertigung der Außenverzahnung der Welle 3 ein Werkzeug mit ursprünglich 10, 20, 30 oder entsprechend mehr Zähnen einschließlich der entfallenden Zähne verwendet. Damit entstehen außer den einmaligen Werkzeugkosten, praktisch keine zusätzlichen Stückkosten.

Die Erfindung ist vorteilhaft anwendbar bei allen CVT-Scheibensätzen mit Ölführung zur Kolben-/Zylindereinheit 17 durch die Wegscheibe 5 im Bereich der Verzahnung 27, insbesondere bei hohen Getriebemomenten.

Die Erfindung ist ebenfalls anwendbar an der entsprechenden Stelle des nicht dargestellten abtriebsseitigen Kegelscheibensatzes.

### Bezugszeichenliste

- 1: Kegelscheibenumschlingungsgetriebe
- 2: Laschenkette
- 2a: radial innere Stellung der Laschenkette
- 3: Welle
- 4: Festscheibe
- 5: Wegscheibe
- 6: Zahnrad
- 7: Kugellager
- 8: Scheibe
- 9: Wellenmutter
- 10: Drehmomentfühler
- 11: axial feststehende Spreizscheibe
- 12: axial verlagerbare Spreizscheibe
- 13: Spreizscheibenkonfiguration
- 14: Kugeln
- 15: erster Druckraum
- 16: zweiter Druckraum
- 17: Kolben-/Zylindereinheit
- 18: erster Druckraum
- 19: zweiter Druckraum
- 20: (drei) Kanäle (Einspeisung)
- 21: Kanal (auslassseitig)
- 22: Zentrierfläche
- 23: Geräuschdämpfungseinrichtung
- 24: (zentrale) Bohrung
- 25: Querbohrung(en)
- 26: Ausdrehung
- 27: Verzahnung
- 28: Verbindungsbohrungen
- 29: Hohlraum / Kammer
- 30: Steuerbohrungen
- 31: Stopfen
- 32: Tellerfeder
- 33: Kanal
- 34: Erhöhung
- 35: Erhöhung

## Patentansprüche

1. Kegelscheibenumschlingungsgetriebe (1) mit antriebsseitigen und abtriebsseitigen Kegelscheibenpaaren, die jeweils eine Festscheibe (4) und eine Wegscheibe (5) aufweisen, die jeweils auf einer antriebsseitigen und einer abtriebsseitigen Welle (3) angeordnet und über ein Umschlingungsmittel (2) zur Drehmomentübertragung verbindbar sind, wobei zumindest eine der Wellen (3) zumindest eine in Längsrichtung der Welle (3) sich erstreckende Bohrung (20) aufweist, von der mindestens eine sich zur Mantelfläche der Welle (3) erstreckende Bohrung (25), wie Schräg- oder Querbohrung, ausgeht, deren Austritt an der Mantelfläche in einem Bereich angeordnet ist, der von der Wegscheibe (5) unabhängig von deren axialer Stellung überdeckt wird, wobei zumindest eine Festscheibe (4) einstückig mit der Welle (3) und die Wegscheibe (5) drehfest, jedoch axial verlagerbar über eine Verzahnung (27) mit der Welle (3) verbunden ist, und wobei der Austritt der Bohrung (25) aus der Mantelfläche im Bereich der Verzahnung (27) angeordnet ist, **dadurch gekennzeichnet, dass** ein Zahn der Verzahnung (27) im Bereich des Bohrungsaustritts entfällt.

2. Kegelscheibenumschlingungsgetriebe (1) nach Anspruch 1, **dadurch gekennzeichnet, dass** zwei dem Bohrungsaustritt benachbarte Zähne am Innendurchmesser der Wegscheibe (5) entfallen.

3. Kegelscheibenumschlingungsgetriebe (1) nach einem der vorhergehenden Ansprüche, **dadurch gekennzeichnet, dass** mehrere Bohrungsaustritte am Umfang vorgesehen sind.

4. Kegelscheibenumschlingungsgetriebe (1) nach Anspruch 3, **dadurch gekennzeichnet, dass** die Bohrungsaustritte gleichmäßig über den Umfang verteilt sind.

5. Kegelscheibenumschlingungsgetriebe (1) nach einem der vorhergehenden Ansprüche, **dadurch gekennzeichnet, dass** die Wegscheibe (5) und die Festscheibe (4) eines Kegelscheibenpaares in Umfangsrichtung einander zugeordnet angeordnet sind.

6. Kegelscheibenumschlingungsgetriebe (1) nach Anspruch 5, **dadurch gekennzeichnet, dass** im Bereich der Innenverzahnung der Wegscheibe eine Erhöhung (34) vorgesehen ist, die an der Stelle des entfallenen Zahnes der Welle (3) eingreift.

7. Kegelscheibenumschlingungsgetriebe (1) nach einem der Ansprüche 5 oder 6, **dadurch gekennzeichnet, dass** im Bereich des Außendurchmessers der Welle (3) zumindest eine Erhöhung (35) vorgesehen ist, die im Bereich der entfallenen Zähne der Wegscheibe (5) zu liegen kommt.

8. Verfahren zum Herstellen eines Kegelscheibenumschlingungsgetriebes (1) nach einem der vorhergehenden Ansprüche, **dadurch gekennzeichnet, dass** das Werkzeug zur Herstellung der Außenverzahnung der Welle (3) und/oder der Innenverzahnung der Wegscheibe (5) - in Umfangsrichtung betrachtet - nur einen Teil des Profils erzeugt und zur Fertigung eines weiteren Teils winkelmäßig verdreht wird.

9. Fahrzeug **gekennzeichnet durch** ein Getriebe nach einem der vorhergehenden Ansprüche.

## Claims

1. Continuously variable cone-pulley transmission (1) with drive-input-side and drive-output-side cone-pulley pairs which have in each case one fixed pulley (4) and one moving pulley (5) which are arranged in each case on a drive-input-side and on a drive-output-side shaft (3) and which can be connected via an endless chain-belt (2) for torque transmission, with at least one of the shafts (3) having at least one bore (20) which extends in the longitudinal direction of the shaft (3) and from which extends at least one bore (25), such as an oblique or transverse bore, which extends to the lateral surface of the shaft (3) and the outlet of which is arranged on the lateral surface in a region which is covered by the moving pulley (5) regardless of the axial position of the latter, with at least one fixed pulley (4) being connected to the shaft (3) in a unipartite fashion and with the moving pulley (5) being connected to the shaft (3) in a rotationally fixed yet axially movable manner by means of a toothing (27), and with the outlet of the bore (25) out of the lateral surface being arranged in the region of the toothing (27), **characterized in that** one tooth of the toothing (27) is omitted in the region of the bore outlet.

2. Continuously variable cone-pulley transmission (1) according to Claim 1, **characterized in that** two teeth adjacent to the bore outlet on the inner diameter of the moving pulley (5) are omitted.

3. Continuously variable cone-pulley transmission (1) according to one of the preceding claims, **characterized in that** a plurality of bore outlets are provided on the periphery.

4. Continuously variable cone-pulley transmission (1) according to Claim 3, **characterized in that** the bore outlets are distributed uniformly over the periphery.

5. Continuously variable cone-pulley transmission (1) according to one of the preceding claims, **characterized in that** the moving pulley (5) and the fixed pulley (4) of a cone-pulley pair are arranged so as to be assigned to one another in the circumferential direction.

6. Continuously variable cone-pulley transmission (1) according to Claim 5, **characterized in that** an elevation (34) is provided in the region of the inner toothing of the moving pulley, which elevation (34) engages at the point of the omitted tooth of the shaft (3).

7. Continuously variable cone-pulley transmission (1) according to one of Claims 5 or 6, **characterized in that** at least one elevation (35) is provided in the region of the outer diameter of the shaft (3), which elevation (35) comes to rest in the region of the omitted teeth of the moving pulley (5).

8. Method for producing a continuously variable cone-pulley transmission (1) according to one of the preceding claims, **characterized in that** the tool for producing the outer toothing of the shaft (3) and/or the inner toothing of the moving pulley (5) - as viewed in the circumferential direction - generates only a part of the profile, and is rotated by an angle to produce a further part.

9. Vehicle, **characterized by** a transmission according to one of the preceding claims.

## Revendications

1. Transmission à variation continue à poulies coniques (1), comprenant des paires de poulies coniques côté entraînement et côté sortie, qui présentent chacune une poulie fixe (4) et une poulie mobile (5), qui sont disposées à chaque fois sur un arbre (3) côté entraînement et côté sortie, et qui peuvent être connectées par le biais d'un moyen d'enveloppement (2) pour le transfert de couple, au moins l'un des arbres (3) présentant au moins un alésage (20) s'étendant dans la direction longitudinale de l'arbre (3), duquel part au moins un alésage (25) s'étendant vers la surface d'enveloppe de l'arbre (3), tel qu'un alésage oblique ou transversal, dont la sortie est disposée sur la surface d'enveloppe dans une région qui est recouverte par la poulie mobile (5) indépendamment de sa position axiale, au moins une poulie fixe (4) étant connectée d'une seule pièce à l'arbre (3) et la poulie mobile (5) étant connectée de manière solidaire en rotation, mais déplaçable axialement, à l'arbre (3) par le biais d'une denture (27), et la sortie de l'alésage (25) hors de la surface d'enveloppe étant disposée dans la région de la denture (27), **caractérisée en ce qu'**il manque une dent de la denture (27) dans la région de la sortie de l'alésage.

2. Transmission à variation continue à poulies coniques (1) selon la revendication 1, **caractérisée en ce qu'**il manque deux dents adjacentes à la sortie de l'alésage sur le diamètre intérieur de la poulie mobile (5).

3. Transmission à variation continue à poulies coniques (1) selon l'une quelconque des revendications précédentes, **caractérisée en ce que** plusieurs sorties d'alésage sont prévues sur la périphérie.

4. Transmission à variation continue à poulies coniques (1) selon la revendication 3, **caractérisée en ce que** les sorties d'alésages sont réparties uniformément sur la périphérie.

5. Transmission à variation continue à poulies coniques (1) selon l'une quelconque des revendications précédentes, **caractérisée en ce que** la poulie mobile (5) et la poulie fixe (4) d'une paire de poulies coniques sont disposées de manière associée l'une à l'autre dans la direction périphérique.

6. Transmission à variation continue à poulies coniques (1) selon la revendication 5, **caractérisée en ce qu'**il est prévu dans la région de la denture interne de la poulie mobile un rehaussement (34) qui vient en prise à l'endroit de la dent manquante de l'arbre (3).

7. Transmission à variation continue à poulies coniques (1) selon l'une quelconque des revendications 5 ou 6, **caractérisée en ce que** dans la région du diamètre extérieur de l'arbre (3), au moins un rehaussement (35) est prévu, lequel vient s'appliquer dans la région des dents manquantes de la poulie mobile (5).

8. Procédé pour fabriquer une transmission à variation continue à poulies coniques (1) selon l'une quelconque des revendications précédentes, **caractérisé en ce que** l'outil pour fabriquer la denture externe de l'arbre (3) et/ou la denture interne de la poulie mobile (5) - vu dans la direction périphérique - ne produit qu'une partie du profil et est tourné angulairement pour fabriquer une autre partie.

9. Véhicule **caractérisé par** une transmission selon l'une quelconque des revendications précédentes.
